# EUROPEAN PATENT APPLICATION

(11) **EP 4 510 306 A1**
(43) Date of publication of application: **19.02.2025**
(21) Application number: 23890457.7
(22) Date of filing: 12.10.2023
(51) Int. Cl.: H01M 10/613, H01M 10/617, H01M 10/625, H01M 50/244, H01M 50/249, H01M 50/289, H01M 10/6556, H01M 10/6561, H01M 10/6567

(54) **BATTERY BOX, BATTERY, AND ELECTRIC DEVICE**

(30) Priority: 17.11.2022 CN 202223054353 U
(71) Applicant: Contemporary Amperex Technology Co., Limited, Ningde, Fujian 352100 (CN)
(72) Inventor: SU, Yu, Ningde, Fujian 352100 (CN); LIU, Chao, Ningde, Fujian 352100 (CN); HUANG, Haihua, Ningde, Fujian 352100 (CN); CHEN, Xubin, Ningde, Fujian 352100 (CN); XIE, Jianzhi, Ningde, Fujian 352100 (CN)
(74) Representative: Kraus & Lederer PartGmbB
(86) International application number: PCT/CN2023/124287
(87) International publication number: WO 2024/104020

(57) **Abstract**

A battery box, a battery and an electrical device. The battery box includes side plates and a bottom plate. The side plates are disposed on the bottom plate around a periphery of the bottom plate. The bottom plate is provided with a cavity. The cavity is internally provided with partition pieces. The partition pieces partition the cavity into at least two flow channels introduced along a first introducing direction. Since the flow channels have the same introducing direction, heat exchange working media in the cavity divided by the flow channels can separately and simultaneously exchange heat with battery cells arranged in a direction intersecting the first introducing direction, and the heat exchange of the battery cells is uniform, which can reduce the temperature difference between the battery cells.

## Description

### CROSS-REFERENCE TO RELATED APPLICATIONS

The present application claims priority to Chinese Patent Application No. 202223054353.9, filed on November 17, 2022 and entitled "BATTERY BOX, BATTERY AND ELECTRICAL DEVICE", which is incorporated herein by reference in its entirety.

### TECHNICAL FIELD

The present application relates to the field of batteries, and in particular, to a battery box, a battery and an electrical device.

### BACKGROUND

Energy saving and emission reduction are the key to the sustainable development of the automotive industry, and electric vehicles have become an important part of the sustainable development of the automotive industry by virtue of their advantages of energy saving and environmental protection. For electric vehicle, battery technology is a crucial factor driving the development thereof.

During use, an internal temperature of a battery rises, and the excessively high temperature will cause the performance of battery cells in the battery to be reduced. Therefore, a cooling structure is usually disposed to cool down the battery cells. However, an existing cooling structure has a problem of nonuniform cooling.

### SUMMARY

In view of the above problem, the present application provides a battery box, a battery and an electrical device to solve the problem of nonuniform cooling of battery cells by a cooling structure in a battery.

According to a first aspect, the present application provides a battery box, including side plates and a bottom plate. The side plates are disposed on the bottom plate around a periphery of the bottom plate. The bottom plate is provided with a cavity. The cavity is internally provided with partition pieces. The partition piece partitions the cavity into at least two flow channels introduced along a first introducing direction.

In technical solutions of embodiments of the present application, after a heat exchange working medium enters the cavity of the bottom plate, a plurality of heat exchange working media are formed to flow through the flow channels along the first introducing direction respectively and finally flow out of the bottom plate. Since the flow channels have the same introducing direction, the heat exchange working media divided by the flow channels in the cavity may separately and simultaneously exchange heat with battery cells arranged in a direction intersecting the first introducing direction, which can relatively uniformly distribute a flow, such that the battery cells in a second direction can roughly synchronously exchange heat, and the heat exchange uniformity of the battery cells is relatively good, thereby contributing to the reduction of the temperature difference between the battery cells and the improvement of the thermal management performance of the battery.

In some embodiments, the partition pieces include first partition pieces. An end of each first partition piece close to inlet ends of the flow channels makes two of the flow channels adjacent thereto communicate. In this case, inlet ends of the two adjacent communicating flow channels communicate with each other, the heat exchange working medium may flow between the inlet ends of the communicating flow channels, and when the heat exchange working medium is conveyed to the inlet ends of the adjacent communicating flow channels, a working medium inlet for conveying the heat exchange working medium may be configured at only one of the inlet ends, which can reduce the number of the working medium inlet, thereby reducing the preparation cost of the battery box.

In some embodiments, in the first introducing direction, the end of each first partition piece close to the inlet ends is spaced apart from an inner wall of the cavity. In this case, a first end of each first partition piece is spaced apart from the inner wall of the cavity to make the adjacent flow channels communicate. The structure is simple, which contributes to the reduction of the preparation cost of the battery box.

In some embodiments, the partition pieces include second partition pieces. In the first introducing direction, an end of each second partition piece close to the inlet ends of the flow channels fits with the inner wall of the cavity to prevent the heat exchange working medium from flowing between two of the flow channels adjacent thereto. In this case, since inlet ends of closed flow channels basically do not communicate, heat exchange working media distributed to the inlet ends of the closed flow channels will not flow to other flow channels and only flow along the closed flow channels, which can increase the content of the heat exchange working media in the closed flow channels and improve the heat exchange effect on the battery cells.

In some embodiments, in the first introducing direction, the end of each second partition piece close to the inlet ends of the flow channels is connected to the inner wall of the cavity. In this case, a first end of each second partition piece is directly connected to the first inner wall of the cavity to realize that the adjacent closed flow channels basically do not communicate. The structure is simple, and the fluid isolation effect of the inlet ends of the adjacent closed flow channels can be improved.

In some embodiments, in the first introducing direction, an end of at least one of the partition pieces close to outlet ends of the flow channels is constructed to make adjacent flow channels communicate. In this case, outlet ends of the adjacent flow channels communicate with each other, and it is possible to dispose only one working medium outlet for the heat exchange working medium to flow out of the bottom plate, which contributes to the reduction of the disposing cost of the working medium outlet. Alternatively, second ends of only part of the partition pieces may make adjacent flow channels communicate. In this case, outlet ends of the part of the adjacent flow channels communicate with each other, and outlet ends of the other part of the adjacent flow channels do not communicate with each other. Then, one working medium outlet may be disposed corresponding to the outlet ends of the mutually communicating flow channels.

In some embodiments, the end of at least one of the partition pieces close to the outlet ends of the flow channels is spaced apart from the inner wall of the cavity. In this case, the second end of each partition piece is spaced apart from a second inner wall of the cavity to form a communicating space to make the outlet ends of the flow channels communicate. The bottom plate has a simple structure, and the preparation cost is relatively low.

In some embodiments, the bottom plate includes a working medium inlet and a working medium outlet. Each flow channel is provided with an inlet end and an outlet end that are oppositely disposed in the first introducing direction. The inlet ends all communicate with the working medium inlet, and the outlet ends all communicate with the working medium outlet. In this case, the working medium inlet and the working medium outlet realize the purpose of the heat exchange working medium entering and exiting the bottom plate.

In some embodiments, the outlet ends of the flow channels communicate with each other. When the outlet ends of the flow channels communicate with each other, the heat exchange working medium can flow out only by disposing one working medium outlet, and the retention time of the heat exchange working medium in the cavity can be increased, which contributes to the reduction of the cost of the bottom plate and the improvement of the heat exchange effect.

In some embodiments, the working medium inlet and the working medium outlet are located on two opposite sides of the bottom plate in the first introducing direction. The working medium inlet is disposed close to the inlet ends of the flow channels. The working medium outlet is disposed close to the outlet ends of the flow channels. In this case, the working medium inlet is closer to the inlet ends of the flow channels, and the working medium outlet is closer to the outlet ends of the flow channels, which can reduce the flow loss of cooling capacity of the heat exchange working medium and improve energy utilization.

In some embodiments, the bottom plate further includes a first blocking rib. A water blocking channel is defined between the first blocking rib and the inner wall of the cavity. The water blocking channel communicates with the working medium inlet. A first flow passing portion is constructed on the first blocking rib. The first flow passing portion makes the water blocking channel communicate with the inlet ends of the adjacent flow channels. In this case, the water blocking channel is formed through the first blocking rib, and then the first flow passing portion formed on the first blocking rib provides the heat exchange working medium for the flow channels. The heat exchange working medium inlet is flexibly arranged.

In some embodiments, the bottom plate further includes a second blocking rib. A water outlet channel is defined between the second blocking rib and the inner wall of the cavity. A second flow passing portion is constructed on the second blocking rib. The second flow passing portion makes the water outlet channel communicate with the outlet ends of the adjacent flow channels. The water outlet channel communicates with the working medium outlet. In this case, the water outlet channel communicates with the outlet ends of the flow channels via the second flow passing portion. The working medium outlet communicates with the water outlet channel. The working medium outlet is flexibly arranged.

In some embodiments, one working medium inlet and one working medium outlet are configured respectively. The working medium inlet communicates with the inlet ends of all the flow channels. The working medium outlet communicates with the outlet ends of all the flow channels. The working medium inlet and the working medium outlet are located on a same side of the bottom plate. In this case, one working medium inlet and one working medium outlet are configured to realize circulation of the heat exchange working medium in the bottom plate, which is relatively low in cost. Moreover, the working medium inlet and the working medium outlet are located on the same side of the bottom plate, which makes it more convenient to mount a pipeline for communication of the heat exchange working medium on the working medium inlet and the working medium outlet, makes it more convenient to arrange the pipeline, and can also reduce the space occupied by the bottom plate in the first introducing direction, making the structure of the bottom plate more compact.

In some embodiments, a total working medium inlet and a total working medium outlet are disposed on the side plates. The working medium inlet communicates with the total working medium inlet. The working medium outlet communicates with the total working medium outlet. In this case, the total working medium inlet and the total working medium outlet are disposed on the side plates, and the space of the side plates is sufficient, such that the total working medium inlet and the total working medium outlet are more convenient to be disposed.

In some embodiments, a space making the working medium inlet communicate with the total working medium inlet is constructed in the side plates, and/or, a space making the working medium outlet communicate with the total working medium outlet is constructed in the side plates. When the heat exchange working medium flows through the space inside the side plates, lateral parts of the battery cells may be cooled down through the side plates. As such, the heat exchange effect on the battery cells can be improved, and energy utilization of a cooling liquid can also be improved.

According to a second aspect, an embodiment of the present application further provides a battery, including the battery box according to any one of the foregoing embodiments and battery cells. The battery cells are received in the battery box.

In some embodiments, the battery further includes a thermal management component. The thermal management component is located in a space enclosed by the side plates and the bottom plate and disposed on the side plates. The thermal management component is in surface contact with at least one of the battery cells and provided with a circulating space for circulation of the heat exchange working medium. In this case, the arrangement of the thermal management component in the battery box can not only strengthen the structure of the battery box, but also improve heat exchange between the heat exchange working medium and a middle battery cell among the battery cells when the heat exchange working medium circulates therein, thereby improving the heat exchange efficiency of the battery cells.

In some embodiments, the bottom plate includes the working medium inlet and the working medium outlet. The total working medium inlet and the total working medium outlet are disposed on the side plates. The working medium inlet communicates with the total working medium inlet via the circulating space, and/or, the working medium outlet communicates with the total working medium outlet via the circulating space. In this case, the heat exchange working medium circulating in the flowing space and the heat exchange working medium circulating in the bottom plate belong to a same channel of heat exchange working medium, which not only extends the flow path of the heat exchange working medium and improves the energy utilization of the heat exchange working medium, but also can simplify the structure of the battery and reduce the cost.

According to a third aspect, an embodiment of the present application further provides an electrical device, including the above battery. The battery is configured to provide electrical energy.

The foregoing description is merely an overview of the technical solutions of the present application. The following describes specific embodiments of the present application illustratively to enable a clearer understanding of the technical solutions of the present application, enable implementation of the technical solutions based on the content of the specification, and make the foregoing and other objectives, features, and advantages of the present application more evident and comprehensible.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not construed as a limitation on the present application. In addition, throughout the accompanying drawings, the same reference signs represent the same components. In the accompanying drawings:
FIG. 1 is a schematic structural diagram of a vehicle in some embodiments of the present application;
FIG. 2 is a schematic exploded view of a battery cell in some embodiments of the present application;
FIG. 3 is a schematic structural diagram of a battery box in some embodiments of the present application;
FIG. 4 is a schematic distribution diagram of flow channels of a bottom plate in the battery box in some embodiments of the present application;
FIG. 5 is a schematic distribution diagram of flow channels of a bottom plate of a battery box in some other embodiments of the present application;
FIG. 6 is a schematic distribution diagram of flow channels of the bottom plate in some embodiments of the present application;
FIG. 7 is a close-up view of a part I shown in FIG. 6;
FIG. 8 is a close-up view of a part II shown in FIG. 6;
FIG. 9 is a schematic outside view of the bottom plate in some embodiments of the present application; and
FIG. 10 is a schematic diagram of a partial structure of the battery in some embodiments of the present application.

### List of reference numerals:

1000. vehicle; 100. battery; 200. controller; 300. motor; 10. battery box; 11. side plate; I. total working medium inlet; U. total working medium outlet; 12. bottom plate; 12a. cavity; a1. first inner wall; a2. second inner wall; i. working medium inlet; u. working medium outlet; 12b. partition piece; s. flow channel; i1. inlet end; u1. outlet end; s1. closed flow channel; s2. communicating flow channel; b1. first partition piece; b11. diversion portion; b2. second partition piece; 12c. first blocking rib; k. water blocking channel; c1. first flow passing portion; 12d. second blocking rib; w. water outlet channel; d1. second flow passing portion; 14. connecting pipeline; F1. first introducing direction; F2. second introducing direction; F3. second direction; 20. battery cell; 21. end cap; 22. housing; 23. cell assembly; 30. thermal management component.

### DETAILED DESCRIPTION OF EMBODIMENTS

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of embodiments of the present application, the term "a plurality of" means two or more (including two). Similarly, "a plurality of groups" means two or more groups (including two groups), and "a plurality of pieces" means two or more pieces (including two pieces).

In the description of embodiments of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of the present application, but not intended to indicate or imply that the indicated device or component is necessarily located in the specified direction or constructed or operated in the specified direction. Therefore, such terms are not to be understood as a limitation on embodiments of the present application.

In the descriptions of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. A person of ordinary skill in the art can understand specific meanings of these terms in the embodiments of the present application as appropriate to specific situations.

A battery box, as an important part of a battery, primarily serves to protect a battery system from external collision, and also to ensure that an internal temperature of the battery is within a certain range.

The applicant has noticed that in the related art, a part of a structure of the battery box serves as a circulating structure of a cooling liquid to cool down battery cells loaded in the battery box. However, an existing battery box has a problem of nonuniform cooling when cooling down the battery cells. The applicant investigates the reasons and finds that a working medium inlet and a working medium outlet of the battery box are located the same side. When flowing from the working medium inlet to the working medium outlet, the cooling liquid has a U-shaped flow path, battery cells located upstream of the flow path of the cooling liquid are cooled first, the temperature of the cooling liquid rises, causing the cooling capacity of the cooling liquid located downstream of the flow path of the cooling liquid to be weaker than the cooling capacity of the upstream cooling liquid, thereby resulting in nonuniform cooling of the battery cells.

Based on the above considerations, in order to solve the problem of nonuniform cooling of the battery cells by a cooling structure in an existing battery, through in-depth research, the applicant has designed a battery box, including side plates and a bottom plate, and the side plates are disposed on the bottom plate around a periphery of the bottom plate. At least two flow channels are formed on the bottom plate. A cooling liquid flows in the flow channels along the same introducing direction. In this way, the temperature of the cooling liquid flowing through the flow channels is relatively uniform, such that the bottom plate can uniformly cool the battery cells in a direction perpendicular to the first introducing direction, thereby improving heat exchange uniformity of the battery cells and reducing the temperature difference between the battery cells.

In order to solve the problem of nonuniform cooling of the battery cells by the cooling structure in the battery, embodiments of the present application provide a battery box, a battery and an electrical device.

After the battery box disclosed in these embodiments of the present application accommodates the battery cells, the battery may be formed. In the battery, the battery cells may be plural in number, and the plurality of battery cells may be connected in series or in parallel or in parallel and series. Connected in parallel and series means that there are both series and parallel connections in the plurality of battery cells. The plurality of battery cells may be directly connected together in series or in parallel or in parallel and series, and then an entirety of the plurality of battery cells is accommodated in the box. Certainly, in the battery, the plurality of battery cells may be first connected in series or in parallel or in parallel and series to form a battery module, and a plurality of battery modules are then connected in series or in parallel or in parallel and series to form an entirety and accommodated in the box. The battery may further include other structures. For example, the battery may further include a busbar component for realizing an electrical connection between the plurality of battery cells.

Each battery cell may be a secondary battery or a primary battery, and may also be a lithium-sulfur battery, a sodium-ion battery, or a magnesium-ion battery, but is not limited thereto. The battery cells may be in a shape such as a cylinder, a flat body, a cuboid, or another shape.

The battery may serve as a power supply of the electrical device. The electrical device may be, but is not limited to, a mobile phone, a tablet, a laptop computer, an electric toy, an electric tool, an electric power cart, an electric vehicle, a ship, a spacecraft, or the like. It is characterized in that the electric toy may include stationary or mobile electric toys, such as a game console, an electric car toy, an electric ship toy, an electric airplane toy, or the like, and the spacecraft may include an airplane, a rocket, a space shuttle, a spaceship, or the like.

For ease of description in the following embodiments, a vehicle 1000 is used as an example of the electrical device according to an embodiment of the present application.

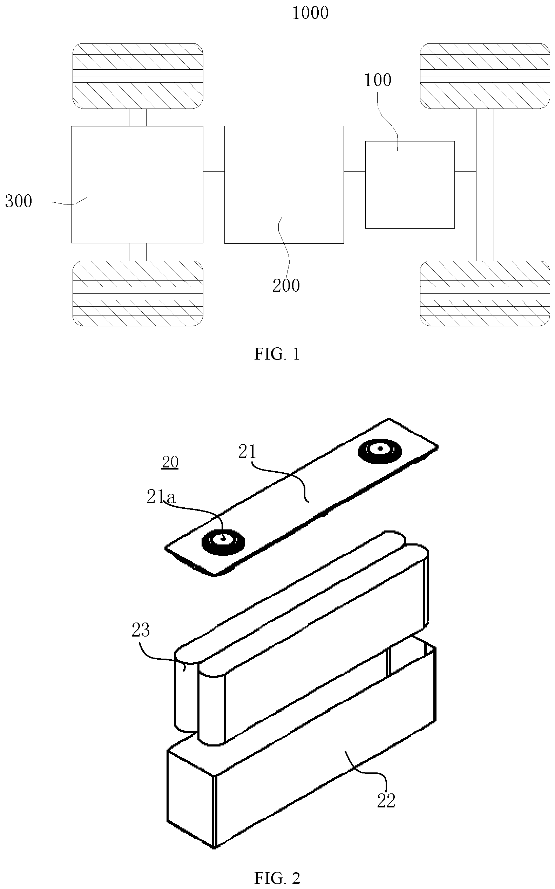

Referring to FIG. 1, FIG. 1 is a schematic structural diagram of a vehicle 1000 according to some embodiments of the present application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet the working power requirements of the vehicle 1000 in start, navigation and running.

In some embodiments of the present application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

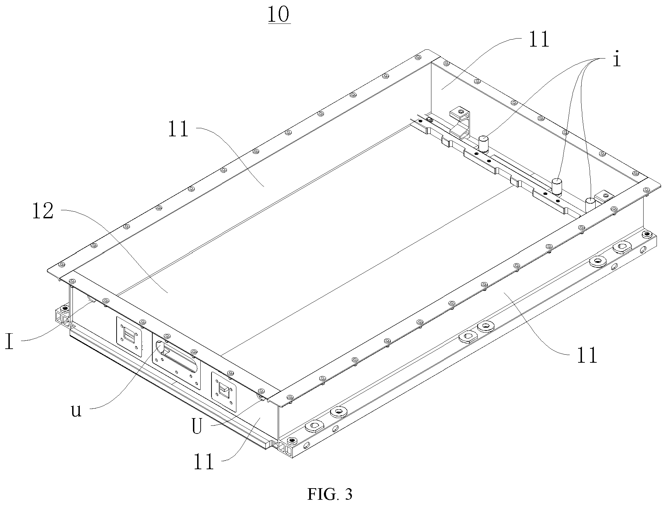

Referring to FIG. 2, FIG. 2 is a schematic exploded view of a battery cell 20 provided by some embodiments of the present application. The battery cell 20 is a minimum unit that makes up a battery. As shown in FIG. 3, the battery cell 20 includes an end cap 21, a housing 22, an electrode assembly 23, and other functional components.

The end cap 21 refers to a component that fits and covers an opening of the housing 22 to isolate an internal environment of the battery cell 20 from an external environment. Optionally, the end cap 21 may be made of a material having a certain degree of hardness and strength (e.g., aluminum alloy). In this way, the end cap 21 is less likely to deform when subjected to extrusion and collision, allowing the battery cell 20 to have higher structural strength and improved safety performance. The end cap 21 may be provided with functional components such as electrode terminals 21a. The electrode terminals 21a may be configured to be electrically connected to the electrode assembly 23 to output or input electrical energy of the battery cell 20.

The housing 22 is an assembly configured to fit the end cap 21 to form the internal environment of the battery cell 20. It is characterized in that the formed internal environment may be configured to accommodate the electrode assembly 23, an electrolyte solution, and other components. The housing 22 and the end cap 21 may be stand-alone components. The opening may be disposed on the housing 22. At the opening, the end cap 21 fits and covers the opening to form the internal environment of the battery cell 20. The housing 22 may have various shapes and sizes, such as a cuboid, a cylinder, or a hexagonal prism. The housing 22 may be made of a variety of materials such as copper, iron, aluminum, stainless steel, aluminum alloy, or plastic, which are not particularly limited in these embodiments of the present application.

The electrode assembly 23 is a component that reacts electrochemically in the battery cell 20. The housing 22 may contain one or more electrode assemblies 23. The electrode assembly 23 is primarily formed by winding or stacking a positive electrode plate and a negative electrode plate, and a separator is usually disposed between the positive electrode plate and the negative electrode plate. Parts of the positive electrode plate and the negative electrode plate having active materials constitute a body portion of the cell assembly, while parts of the positive electrode plate and the negative electrode plate having no active material constitute tabs respectively. The positive tab and the negative tab may be located at one end of the body portion together or at two ends of the body portion respectively. In a charge-and-discharge process of the battery, the positive active material and the negative active material react with the electrolyte solution, and the tabs are connected to the electrode terminals to form a current circuit.

A "heat exchange working medium" mentioned in these embodiments of the present application may be a cooling working medium or a heating working medium. Regardless of the type of the heat exchange working medium, the battery box 10 provided by these embodiments of the present application uniformly distribute a flow of the heat exchange working medium, which can reduce the temperature difference between battery cells 20 in the battery 100. These embodiments of the present application introduce the effect of the battery box 10 by an example in which the "heat exchange working medium" has a heat exchange effect, which does not limit the type of the heat exchange working medium in the battery box 10. Understandably, when the heat exchange working medium in the battery box 10 is the heating working medium, the heating working medium may heat up the battery cells 10 in a low temperature environment, and can reduce the temperature difference between the battery cells 10 and improve temperature equilibrium of the battery cells 10.

The following describes the battery box disclosed by these embodiments of the present application in detail.

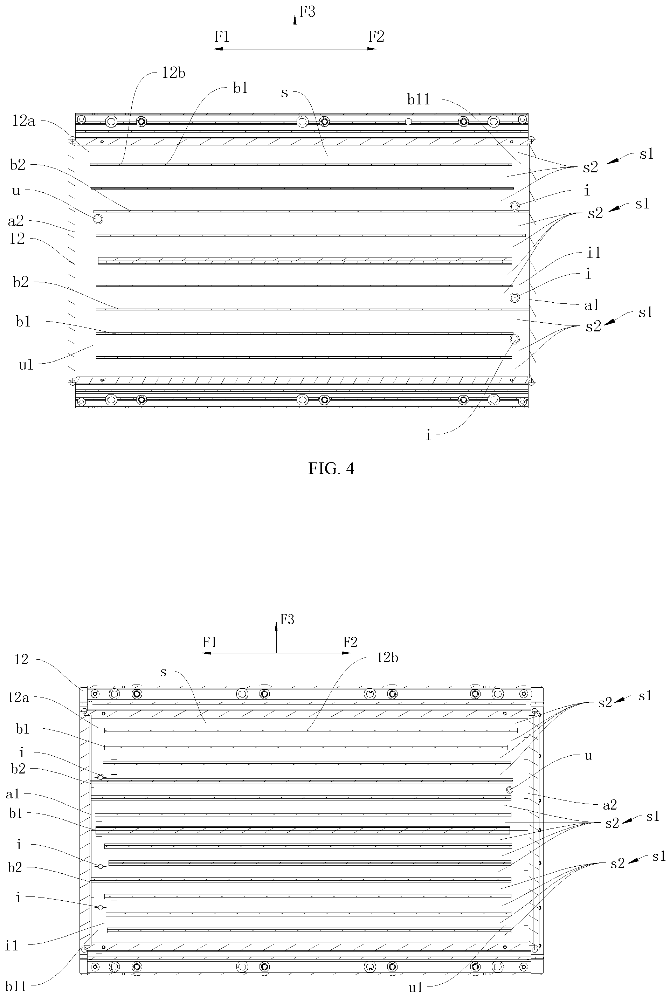

FIG. 3 is a schematic structural diagram of a battery box 10 in some embodiments of the present application. FIG. 4 is a schematic distribution diagram of flow channels s of a bottom plate 12 in the battery box 10 in some embodiments of the present application.

Referring to FIG. 3 and FIG. 4, the battery box 10 provided by some embodiments of the present application include side plates 11 and a bottom plate 12. The side plates 11 are disposed on the bottom plate 12 around a periphery of the bottom plate 12. The bottom plate 12 is provided with a cavity 12a. The cavity 12a is internally provided with partition pieces 12b. The partition pieces 12b partition the cavity 12a into at least two flow channels s introduced along a first introducing direction F1.

The bottom plate 12 is usually in the shape of a plate. A thickness direction of the bottom plate 12 refers to a direction of a minimum size thereof. The periphery of the bottom plate 12 refers to a contour edge disposed around the thickness direction thereof. The side plates 11 surround the periphery of the bottom plate 12 and are constructed to adapt to the shape of a peripheral contour of the bottom plate 12. When the periphery of the bottom plate 12 is circular, the side plates 11 close in to form a circle. When the periphery of the bottom plate 12 is prismatic, the side plates 11 close in to form a prisma. The side plates 11 may be integrated or separated, which is not limited herein. The battery box 10 may further be provided with a cap body. The cap body is disposed on a side of the side plates 11 oriented back away from the bottom plate 12, and the cap body, the side plates 11 and the bottom plate 12 jointly close in to form an accommodation cavity for accommodating the battery cell 20.

The cavity 12a is formed in the bottom plate 12, and the partition pieces 12b are disposed in the cavity 12a. The partition pieces 12b and a wall of the cavity 12a may be separated and spliced, and may also be integrated, which is not limited, as long as a structure forming the cavity 12a may be spliced by a plurality of components and may also be integrally formed by one component. The partition pieces 12b may be in the shape of a plate, a thin sheet, or the like, and extend roughly along the first introducing direction F1.

In practical applications, the first introducing direction F1 may correspond to a length direction of the bottom plate 12. When the battery box 10 accommodates a prismatic battery cell, a side face with a relatively large surface area of the battery cell 10 extends along the first introducing direction F1.

The heat exchange working medium circulating in the flow channels s may be a gaseous refrigerant (e.g., Freon), liquid water, or the like, as long as the temperature thereof meets demands. The flow channels s are arranged in parallel in a direction (i.e., a second direction F3) intersecting the first introducing direction F1. The heat exchange working medium flows from inlet ends i1 of the flow channels s to outlet ends u1 of flowing channels via the flow channels s along the first introducing direction F1. The first introducing direction F1 may be a linear direction, a curve direction, or the like. Understandably, each flow channel s is provided with an inlet end i1 and an outlet end u1 that are oppositely disposed in the first introducing direction F1, and the heat exchange working medium flows from the inlet ends i1 of the flow channels s to the outlet ends u1 of the flow channels s and finally flows out of the bottom plate 12. The inlet ends i1 of the flow channels s are located on a same side in the first introducing direction F1, and the outlet ends u1 of the flow channels s are located on a same other side in the first introducing direction F1.

The inlet ends i1 of the flow channels s may communicate, not communicate or partially communicate, and the outlet ends u1 of the flow channels s may also communicate, not communicate or partially communicate, which is not limited in these embodiments.

According to the above battery box 10, after entering the cavity 12a of the bottom plate 12, the heat exchange working medium first flows to the inlet ends i1 of the flow channels s and forms a plurality of heat exchange working media to flow to the outlet ends u1 of the flow channels s via the flow channels s along the first introducing direction F1 respectively, and finally flows out of the bottom plate 12.

Since the flow channels s have the same introducing direction, the heat exchange working media divided by the flow channels s in the cavity 12a may separately and simultaneously exchange heat with battery cells 20 arranged in the direction (defined as the second direction F3) intersecting the first introducing direction F1, which can relatively uniformly distribute the flow, such that the battery cells 20 in the second direction F3 can roughly synchronously exchange heat, and the heat exchange uniformity of the battery cells 20 is relatively good, thereby contributing to the reduction of the temperature difference between the battery cells 20 and the improvement of the thermal management performance of the battery 100.

In some embodiments, referring to FIG. 4, the partition pieces 12b include first partition pieces b1. An end of each first partition piece b1 close to the inlet ends i1 of the flow channels s makes two of the flow channels s adjacent thereto communicate.

In these embodiments of the present application, for ease of description, an end of each partition piece 12b close to the inlet ends i1 of the flow channels s is defined as a first end, and the other end is defined as a second end. Flow channels partitioned by the first partition pieces b1 are defined as communicating flow channels s2.

The first end of each first partition piece b1 makes two of the flow channels s adjacent thereto communicate. That is, inlet ends i1 of the two adjacent communicating flow channels s2 communicate. Understandably, the first end of each first partition piece b1 is provided with a diversion portion b11, and each first partition piece b1 makes the two adjacent communicating flow channels s2 communicate via the diversion portion b11 thereof. The diversion portion b11 may be a diversion notch, a diversion hole, or the like, as long as the two adjacent communicating flow channels s2 can communicate.

In this case, the inlet ends i1 of the two adjacent communicating flow channels s2 communicate with each other. The heat exchange working medium may flow between the inlet ends i1 of the communicating flow channels s2. When the heat exchange working medium is conveyed to the inlet ends i1 of the adjacent communicating flow channels s2, a working medium inlet i for conveying the heat exchange working medium may be configured at only one of the inlet ends i1, which can reduce the number of the working medium inlet i, thereby reducing the preparation cost of the battery box 10.

In some embodiments, referring to FIG. 4, in the first introducing direction F1, an end of each first partition piece b1 close to the inlet ends i1 is spaced apart from an inner wall of the cavity 12a.

In these embodiments of the present application, for ease of description, an inner wall of the cavity 12a opposite to the first end of each partition piece 12b in the first introducing direction F1 is defined as a first inner wall a1, and an inner wall of the cavity 12a opposite to the second end of the partition piece 12b in the first introducing direction F1 is defined as a second inner wall a2.

The diversion portion b11 formed by the first end of each first partition piece b1 and the inner wall of the cavity 12a in the first introducing direction F1 by spacing is a diversion spacing. That is, the first end of the first partition piece b1 is spaced apart from the first inner wall of the cavity 12a to form the diversion spacing.

A value of a size of the diversion spacing may be within a range of 1 mm to 60 mm. The larger the value of the diversion spacing, the more smoothly the heat exchange working medium flows in the inlet ends i1 of the adjacent communicating flow channels s2, the more uniform the content of the heat exchange working medium entering the communicating flow channels s2 is, the more uniform the heat exchange effect generated by the heat exchange working medium in the communicating flow channels s2 is, the better the heat exchange uniformity of the battery cells 20 is, and the smaller the temperature difference between the battery cells 20 is.

In this case, the first end of each first partition piece b1 is spaced apart from the inner wall of the cavity 12a to make the adjacent flow channels s communicate. The structure is simple, which contributes to the reduction of the preparation cost of the battery box 10.

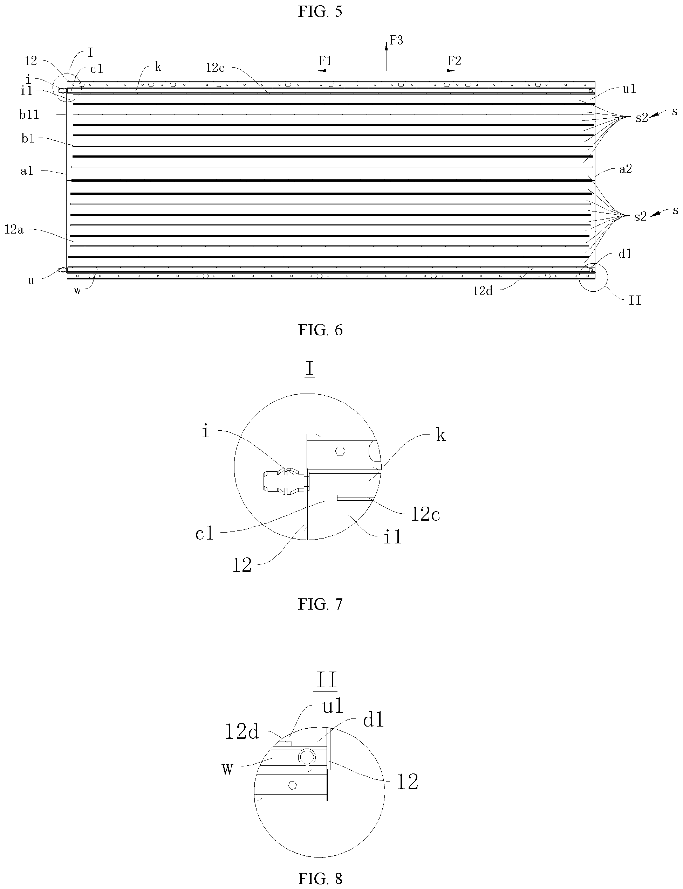

FIG. 5 is a schematic distribution diagram of flow channels s of a bottom plate 12 of a battery box 10 in some other embodiments of the present application.

In some embodiments, referring to FIG. 5, the partition pieces 12b include second partition pieces b2. In the first introducing direction F1, an end of each second partition piece b2 close to the inlet ends i1 of the flow channels s fits with the inner wall of the cavity 12a to prevent the heat exchange working medium from flowing between two of the flow channels s adjacent thereto.

In these embodiments of the present application, for ease of description, flow channels partitioned by the second partition pieces b2 are defined as closed flow channels s1. An end of the second partition piece b2 close to the inlet ends i1 of the flow channels is a first end of the second partition piece b2.

The first end of each second partition piece b2 fits with the first inner wall a1 of the cavity 12a to prevent the heat exchange working medium from circulating between two adjacent closed channels s1. In order to realize non-circulation of the heat exchange working medium between the two adjacent closed channels s1, the first end of each second partition piece b2 and the first inner wall a1 of the cavity 12a may be completely connected or spaced by a spacing, as long as the spacing is small enough and can basically prevent the heat exchange working medium from circulating between the two closed channels s1. For example, the spacing between the first end of each second partition piece b2 and the first inner wall a1 of the cavity 12a does not exceed 0.5 mm. Experiments prove that in this case, flow resistance of the first end of each second partition piece b2 and the first inner wall a1 of the cavity 12a is large, the heat exchange working medium basically does not flow between adjacent closed flow channels s1, and the blocking effect between inlet ends i1 of the adjacent closed channels s1 is relatively good. Understandably, the closed flow channels s1 are disposed in parallel in the direction (i.e., the second direction F3) intersecting the first introducing direction F1.

Since the inlet ends i1 of the closed flow channels s1 basically do not communicate, heat exchange working media distributed to the inlet ends i1 of the closed flow channels s1 will not flow to other flow channels s and only flow along the closed flow channels s1, which can increase the content of the heat exchange working media in the closed flow channels s1 and improve the heat exchange effect on the battery cells 20.

Understandably, since the inlet ends i1 of the closed flow channels s1 do not communicate, in practical applications, a communicating working medium inlet may be configured at the inlet end i1 of each closed flow channel s1, and the working medium inlets independently distribute the heat exchange working media to the closed flow channels s1.

In some embodiments, in the first introducing direction F1, the end of each second partition piece b2 close to the inlet ends i1 of the flow channels s is connected to the inner wall of the cavity 12a.

In order to realize non-communicating of the inlet ends i1 of the adjacent closed flow channels s1, the first end of each second partition piece b2 and the first inner wall a1 of the cavity 12a are directly connected, such as connected by bonding, welding, integral forming, and contacting.

In this case, the first end of each second partition piece b2 and the first inner wall of the cavity 12a are directly connected to realize basic non-communicating between the adjacent closed flow channels s1. The structure is simple, and the fluid isolation effect of the inlet ends i1 of the adjacent closed flow channels s1 can be improved.

In some embodiments, referring to FIG. 5, the partition pieces 12b include first partition pieces b1 and second partition pieces b2. The first partition pieces b1 are located in the closed channels s1 defined by the second partition pieces b2. The inlet ends i1 of the adjacent closed flow channels s1 do not communicate. Each first partition piece b1 partitions the closed flow channels s1 in which the first partition piece b1 is located into a plurality of communicating flow channels s2 with inlet ends i1 communicating with each other.

For the description of the first partition pieces b1, the second partition pieces b2, the closed flow channels s1 and the communicating flow channels s2, see the above recitation for details. In this case, the communicating flow channels s2 are disposed in the closed flow channels s1. The inlet ends i1 of the communicating flow channels s2 in each closed flow channel s1 may communicate through one working medium inlet i, and the heat exchange working medium is provided through the working medium inlet i, which contributes to the reduction of the number of the working medium inlet i. In addition, the heat exchange working medium in the closed flow channel s1 is distributed into the circulating flow channels s2 through the first partition piece b1. The heat exchange working medium is more uniformly distributed, and the heat exchange effect is better.

Specifically, in these embodiments, in the first introducing direction F1, upstream ends of the first partition pieces b1 in the same closed flow channel s1 are spaced from the inner wall of the cavity 12a by unequal distances. Specifically, the closer the communicating flow channels s2 are to the working medium inlet i, the smaller the spacing distance between the first ends of the first partition pieces b1 forming the communicating flow channels s2 by partitioning and the first inner wall a1 of the cavity 12a is, otherwise, the larger. The flow of the heat exchange working medium flowing to the communicating flow channels s2 is more uniform, which contributes to uniform cooling of the battery cells 20.

In some embodiments, referring to FIG. 4 and FIG. 5, in the first introducing direction F1, an end of at least one of the partition pieces 12b close to outlet ends u1 of the flow channels s is constructed to make adjacent flow channels s communicate.

The end of each partition piece 12b close to outlet ends u1 of the flow channels s is a second end of the partition piece 12b. The second end of the partition piece 12b make the adjacent flow channels s communicate. The second end of the partition piece 12b may be connected to the second inner wall a2 of the cavity 12a, and a communicating structure (e.g., a communicating hole, or a communicating notch) is formed at the second end of the partition piece 12b.

Understandably, the bottom plate 12 is provided with a working medium outlet u for a cooling medium to flow out of the bottom plate 12. When the second end of at least one of the partition pieces 12b makes the adjacent flow channels s communicate, it indicates that outlet ends u1 of at least a part of the flow channels s communicate with each other. In this case, for the part of the communicating flow channels s, it is possible to dispose only one working medium outlet u for the heat exchange working medium of the part of the flow channels s to flow out of the bottom plate 12. The number of the working medium outlet u can be reduced, and the structure and cost of the bottom plate 12 are simplified.

The second end of each partition piece 12b may make the adjacent flow channels s communicate. In this case, the outlet ends u1 of the adjacent flow channels s communicate with each other, it is possible to dispose only one working medium outlet u for the heat exchange working medium to flow out of the bottom plate 12, which contributes to the reduction of the disposing cost of the working medium outlet u. Alternatively, the second ends of a part of the partition pieces 12b may make the adjacent flow channels s communicate. In this case, outlet ends u1 of the part of the adjacent flow channels s communicate with each other, and outlet ends u1 of the other part of the adjacent flow channels s do not communicate with each other. Then, one working medium outlet u may be disposed corresponding to the outlet ends u1 of the mutually communicating flow channels s.

In some embodiments, referring to FIG. 4 and FIG. 5, the end of at least one of the partition pieces 12b close to the outlet ends u1 of the flow channels s is spaced apart from the inner wall of the cavity 12a.

The end of each partition piece 12b close to the outlet ends u1 of the flow channels s is spaced apart from the inner wall of the cavity 12a. That is, the second end of the partition piece 12b is spaced apart from the second inner wall a2 of the cavity 12a to form a communicating space. The outlet ends u1 of the adjacent flow channels s can communicate via the communicating space.

In this case, the second ends of the partition pieces 12b are spaced apart from the second inner wall a2 of the cavity 12a to form the communicating spaces, so as to make the outlet ends u1 of the flow channels s communicate. The bottom plate 12 has a simple structure, and the preparation cost is relatively low.

In some embodiments, the bottom plate 12 includes a working medium inlet i and a working medium outlet u. Each flow channel s is provided with an inlet end i1 and an outlet end u1 that are oppositely disposed in the first introducing direction F1. Each inlet end i1 communicates with the working medium inlet i, and each outlet end u1 communicates with the working medium outlet u.

One working medium inlet i may communicate with the inlet end i1 of at least one of the flow channel s, and one working medium outlet u may communicate with the outlet end u1 of at least one of the flow channel s. When all the partition pieces 12b are the first partition pieces b1, the inlet ends i1 of the flow channels s communicate, and then one or more working medium inlets i may be configured. When the partition pieces 12b include the second partition pieces b2, the closed flow channels s1 formed by partitioning of the second partition pieces b2 communicate with different working medium inlets i respectively. When the outlet ends u1 of the flow channels s communicate with each other, it is possible to configure only one working medium outlet u, and if not communicating with each other, the outlet ends u1 of the flow channels s are configured with working medium outlets u respectively.

After entering the cavity 12a via the working medium inlet i, the heat exchange working medium flows to the inlet ends i1 of the flow channels s and flows to the outlet ends u1 of the flow channels s under the guidance of the flow channels s, and finally flows out of the bottom plate 12 via the working medium outlet u. The working medium inlet i and the working medium outlet u may be provided by joints disposed on the bottom plate 12.

In this case, the working medium inlet i and the working medium outlet u realize the purpose of the heat exchange working medium entering and exiting the bottom plate 12.

In some embodiments, the outlet ends u1 of the flow channels s communicate with each other. Specifically, the second ends of the partition pieces 12b may be spaced apart from the second inner wall a2 of the cavity 12a to make the outlet ends u1 of the flow channels s communicate with each other.

When the outlet ends u1 of the flow channels s communicate with each other, the heat exchange working medium can flow out only by disposing one working medium outlet u, and the retention time of the heat exchange working medium in the cavity 12a can be increased, which contributes to the reduction of the cost of the bottom plate 12 and the improvement of the heat exchange effect.

In some embodiments, referring to FIG. 4 and FIG. 5, the working medium inlet i and the working medium outlet u are located on two opposite sides of the bottom plate 12 in the first introducing direction F1. The working medium inlet i is disposed close to the inlet ends i1 of the flow channels s, and the working medium outlet u is disposed close to the outlet ends u1 of the flow channels s.

The working medium inlet i communicates with the inlet ends i1 of the flow channels s, and the working medium outlet u communicates with the outlet ends u1 of the flow channels s. The working medium inlet i is disposed on a side corresponding to the inlet ends i1, and the working medium outlet u is disposed on a side corresponding to the outlet ends u1. As such, the working medium inlet i is closer to the inlet ends i1 of the flow channels s, and the working medium outlet u is closer to the outlet ends u1 of the flow channels s, which can reduce the flow loss of cooling capacity of the heat exchange working medium and improve energy utilization.

Certainly, in other embodiments, the working medium inlet i and the working medium outlet u may also be disposed on the same two sides of the first introducing direction F1, or arranged on two adjacent sides of a bottom, without being specifically limited.

FIG. 6 is a schematic distribution diagram of flow channels s of the bottom plate 12 in some embodiments of the present application. FIG. 7 and FIG. 8 are close-up views of a part I and a part II shown in FIG. 6 respectively.

In some embodiments, referring to FIG. 6 and FIG. 7, the bottom plate 12 further includes a first blocking rib 12c. A water blocking channel k is defined between the first blocking rib 12c and the inner wall of the cavity 12a. The water blocking channel k communicates with the working medium inlet i. A first flow passing portion c1 is constructed on the first blocking rib 12c. The first flow passing portion c1 makes the water blocking channel k communicate with inlet ends i1 of adjacent flow channels s.

The first blocking rib 12c and the inner wall of the cavity 12a may be connected by integral forming, bonding, welding, or the like. The first blocking rib 12c may be in the shape of a plate, a thin sheet, or the like. The first blocking rib 12c is close to the inner wall of the cavity 12a. The first blocking rib 12c may extend along the first introducing direction F1 and defines the water blocking channel k together with the inner wall of the cavity 12a in the direction intersecting the first introducing direction F1. The working medium inlet i communicates with the water blocking channel k. Alternatively, the first blocking rib 12c extends along the direction (i.e., the second direction F3) intersecting the first introducing direction F1, and defines the water blocking channel k together with the inner wall of the cavity 12a in the first introducing direction F1 (understandably, the inner wall is the first inner wall a1). The arrangement position of the working medium inlet i is not limited, as long as the working medium inlet i can communicate with the water blocking channel k. There may be one or more working medium inlets i communicating with the water blocking channel k.

The first flow passing portion c1 may be a notch, a hole structure or the like formed on the first blocking rib 12c, and may also be a flow passing space formed by the water blocking channel k and the inner wall of the cavity 12a in an extending direction of the water blocking channel k by spacing, without being specifically limited. The first flow passing portion c1 communicates with the inlet ends i1. The first flow passing portion c1 may be disposed at an end of the first blocking rib 12c close to the inlet ends i1 of the flow channels s, so as to shorten the distance of the heat exchange working medium flowing from the water blocking channel k to the inlet ends i1, and flow distribution is more uniform.

The first flow passing portion c1 may guide the heat exchange working medium into a flow channel s adjacent to the water blocking channel k. After entering the adjacent flow channel, the heat exchange working medium may enter the flow channels s through communication between the inlet ends i1 of the flow channels s.

In these embodiments shown in FIG. 6, all the flow channels s are communicating flow channels s2. In this case, when communicating with an inlet end i1 of an adjacent flow channel s, the first flow passing portion c1 also communicates with inlet ends i1 of other flow channels s. The working medium inlet i flowing out of the first flow passing portion c1 may enter the flow channels s via the inlet ends i1 of the flow channels s. In other embodiments, the flow channel s adjacent to the water blocking channel k may be a closed flow channel s1. In this case, the closed flow channel s1 is provided with the heat exchange working medium via the first flow passing portion c1. Other closed flow channels s1 may be provided with heat exchange working media via working medium inlets i arranged in other ways.

In this case, the water blocking channel k is formed through the first blocking rib 12c, and then the first flow passing portion c1 formed by the first blocking rib 12c provides the heat exchange working medium for the flow channels s. The working medium inlet i is flexibly arranged.

In some embodiments, referring to FIG. 6 and FIG. 8, the bottom plate 12 further includes a second blocking rib 12d. A water outlet channel w is defined between the second blocking rib 12d and the inner wall of the cavity 12a. A second flow passing portion d1 is constructed on the second blocking rib 12d. The second flow passing portion d1 makes the water outlet channel w communicate with outlet ends u1 of adjacent flow channels s. The water outlet channel w communicates with the working medium outlet u.

The second blocking rib 12d may roughly extend along the first introducing direction F1, and defines the water outlet channel w together with the inner wall of the cavity 12a in the direction (i.e., the second direction F3) intersecting the first introducing direction F1. The second blocking rib 12d may also roughly extends along the direction intersecting the first introducing direction F1, and defines the water outlet channel w together with the inner wall of the cavity 12a in the first introducing direction F1 (the inner wall is the second inner wall a2). The number of the working medium outlet u communicating with the water outlet channel w may be one or more.

The water outlet channel w communicates with the working medium outlet u, and communicates with the outlet ends u1 of all the flow channels s via the second flow passing portion d1. The second flow passing portion d1 may be a notch, a hole structure or the like formed on the second blocking rib 12d, and may also be a flow passing space formed between an end of the second blocking rib 12d close to the outlet ends u1 of the flow channels s and the inner wall of the cavity 12a in the first introducing direction F1 by spacing.

In this case, the water outlet channel w communicates with all the outlet ends u1 via the second flow passing portion d1. The working medium outlet u communicates with the water outlet channel w. The working medium outlet u is flexibly arranged.

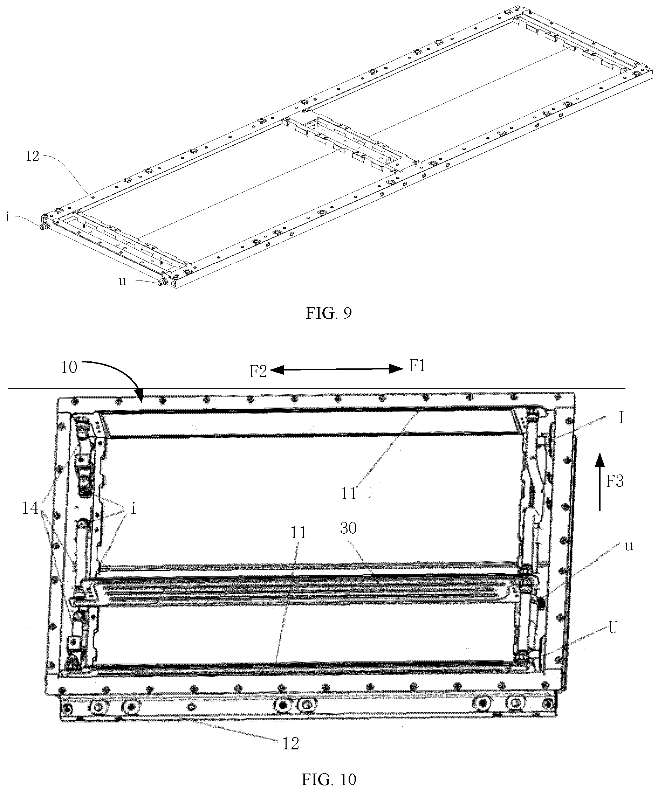

FIG. 9 is a schematic outside view of the bottom plate 12 in some embodiments of the present application.

In some embodiments, one working medium inlet i and one working medium outlet u are configured respectively. The working medium inlet i communicates with the inlet ends i1 of all the flow channels s. The working medium outlet u communicates with the outlet ends u1 of all the flow channels s. The working medium inlet i and the working medium outlet u are located on the same side of the bottom plate 12.

The working medium inlet i and the working medium outlet u may be located on the same side of the bottom plate 12 in the first introducing direction F, and may also located on the same side of the bottom plate 12 in the second direction F3, which is not limited.

In this case, one working medium inlet i and one working medium outlet u are configured to realize circulation of the heat exchange working medium in the bottom plate 12, which is relatively low in cost. Moreover, the working medium inlet i and the working medium outlet u are located on the same side of the bottom plate 12, which makes it more convenient to mount a pipeline for communication of the heat exchange working medium on the working medium inlet i and the working medium outlet u, make it more convenient to arrange the pipeline, and can also reduce the space occupied by the bottom plate 12 in the first introducing direction F1, making the structure of the bottom plate 12 more compact.

In order to realize that the working medium inlet i and the working medium outlet u are located on the same side of the bottom plate 12, specifically, in an embodiment, as shown in FIG. 6, both the first blocking rib 12c and a second blocking piece are arranged along the first introducing direction F1, and the working medium inlet i and the working medium outlet u are located on the same side of the bottom plate 12 in the first introducing direction F1.

Both the first blocking rib 12c and the second blocking rib 12d are arranged along the first introducing direction F1. That is, both the water blocking channel k and the water outlet channel w extend along the first introducing direction F1. When the working medium inlet i and the working medium outlet u are located on the side where the inlet ends i1 of the flow channels s are located, the water outlet channel w guides the heat exchange working medium to flow along a second introducing direction F2 parallel to the first introducing direction F1, and the first flow passing portion c1 on the first blocking rib 12c is arranged at the end of the first blocking rib 12c close to the inlet ends i1 and is close to the working medium inlet i (the embodiment shown in FIG. 6). When the working medium inlet i and the working medium outlet u are located on the side where the outlet ends u1 of the flow channels s are located, the water blocking channel k guides the heat exchange working medium to flow in the second introducing direction F2, the first flow passing portion c1 on the first blocking rib 12c is arranged at the end of the first blocking rib 12c close to the inlet ends i1, and the second flow passing portion d1 of the second blocking rib 12d is arranged on the end close to the outlet ends u1 and is close to the working medium outlet u.

Specifically, in other embodiments (not shown in the drawing), one of the first blocking rib 12c and the second blocking rib 12d extends along the first introducing direction F1, and the other extends along the direction (i.e., the second direction F3) intersecting the first introducing direction F, as long as the first flow passing portion c1 of the first blocking rib 12c is arranged at the end where the inlet ends i1 of the flow channels s are located, the second flow passing portion c2 of the second blocking rib 12d is arranged at the end where the outlet ends u1 of the flow channels s are located. The working medium inlet i and the working medium outlet u may also be located on the same side of the bottom plate 12.

Certainly, the solution for realizing that the working medium inlet i and the working medium outlet u are located on the same side of the bottom plate 12 is not limited to the above solution. For example, only the second blocking rib 12d is disposed to guide the heat exchange working medium of the outlet ends u1 of the flow channels s to a side of the bottom plate 12 where the working medium inlet i is located.

In some embodiments, referring to FIG. 3, a total working medium inlet I and a total working medium outlet U are disposed on the side plates 11. The working medium inlet i communicates with the total working medium inlet I. The working medium outlet u communicates with the total working medium outlet U.

The total working medium inlet I is configured to communicate with a heat exchange working medium providing device. The total working medium outlet U is configured to communicate with a heat exchange working medium recovery device. The working medium inlet i may communicate with the total working medium inlet I via a pipeline. The working medium outlet u may communicate with the total working medium outlet U via a pipeline. In this case, the total working medium inlet I and the total working medium outlet U are disposed on the side plates 11, and the space of the side plates 11 is sufficient, such that the total working medium inlet I and the total working medium outlet U are more convenient to dispose.

In some embodiments, a space making the working medium inlet i communicate with the total working medium inlet I is constructed in the side plates 11, and/or, a space making the working medium outlet u communicate with the total working medium outlet U is constructed in the side plates 11.

That is, after flowing out of the total working medium inlet I, the heat exchange working medium flows through the space inside the side plates 11, then enters the bottom plate 12; and/or, after flowing out of the working medium outlet u of the bottom plate 12 the heat exchange working medium flows through the space of the side plates 11, then flows back to the total working medium outlet U.

Specifically, a space for circulation of the heat exchange working medium may be constructed in part of the side plates 11. For example, the four side plates 11 close in to form a prismatic structure, and then the space for circulation of the heat exchange working medium may be disposed in one or two or three or all of the side plates 11.

When the heat exchange working medium flows through the space inside the side plates 11, lateral parts of the battery cells 20 may be cooled down through the side plates 11. As such, the heat exchange effect on the battery cells 20 can be improved, and energy utilization of a cooling liquid can also be improved.

In an embodiment of the present application, the battery box 10 includes the side plates 11 and the bottom plate 12. The side plates 11 are disposed on the bottom plate 12 around the periphery of the bottom plate 12. The bottom plate 12 is provided with the cavity 12a, the working medium inlet i and the working medium outlet u. The cavity 12a is internally provided with the partition pieces 12b. The partition pieces 12b partition the cavity 12a into at least two flow channels s introduced along the first introducing direction F1. Each flow channel s is provided with the inlet end i1 and the outlet end u1 that are oppositely disposed in the first introducing direction F1. The working medium inlet i communicates with all the inlet ends i1, the working medium outlet u communicates with all the outlet ends u1, and the outlet ends u1 of the flow channels s communicate with each other. The total working medium inlet I and the total working medium outlet U are disposed on the side plates 11. The space making the total working medium inlet I communicate with the working medium inlet i is constructed in the side plates 11, and/or, the space making the total working medium outlet U communicate with the working medium outlet u is constructed in the side plates 11.

According to a second aspect, an embodiment of the present application further provides a battery 100, including the battery box 10 according to any one of the foregoing embodiments and battery cells 20. The battery cells 20 are received in the battery box 10. The battery 100 includes all of the above beneficial effects, details of which are omitted here.

FIG. 10 is a schematic diagram of a partial structure of the battery 100 in some embodiments of the present application.

In some embodiments, referring to FIG. 10, the battery 100 further includes a thermal management component 13. The thermal management component 13 is located in a space enclosed by the side plates 11 and the bottom plate 12 and disposed on the side plates 11. The thermal management component 13 is in surface contact with at least one of the battery cells 20 and provided with a circulating space for circulation of the heat exchange working medium.

The thermal management component 13 is a component that manages the temperature of the battery cells 20 in the battery 100, and may realize the functions such as cooling, heating and/or temperature equalization. The specific form of the thermal management component 13 is not limited, and the thermal management component 13 may select a conventional configuration of battery thermal management in the art. For example, the thermal management component 13 may include a temperature detecting element, an air cooling assembly (or a liquid cooling assembly), a heating assembly, or the like. The temperature detecting element is configured to detect an internal temperature of the battery box 10, and based on this, to control the air cooling assembly (or the liquid cooling assembly) and the heating assembly to work (working parameters of the air cooling assembly, the liquid cooling assembly or the heating assembly may be changed) to adjust the temperature, so as to maintain working temperature equalization of the battery cells 10.

The thermal management component 13 may have an elongate shape, is located in the space enclosed by the side plates 11 and the bottom plate 12, and both ends of the thermal management component 13 are connected to the side plates 11. Specifically, the thermal management component 13 may extend along the first introducing direction F1 and is connected to the side plates 11 on the two sides. The thermal management component 13 and the side plates 11 may be fixed by snap-fitting, threaded connection, bonding, welding, or the like.

The circulating space in the thermal management component 13 enables the circulation of the heat exchange working medium. The thermal management component 13 and the side plates 11 form a space for accommodating the battery cells 20. When the battery cells 20 are prismatic, outer surfaces of the battery cells 20 extending along the first introducing direction F are in contact with the thermal management component 13.

In this case, the arrangement of the thermal management component 13 in the battery box 10 can not only strengthen the structure of the battery box 10, but also improve heat exchange between the heat exchange working medium and a middle battery cell 20 among the battery cells 20 when the heat exchange working medium circulates therein, thereby improving the heat exchange efficiency of the battery cells 20.

Specifically, the thermal management component 13 includes a Battery Management System (BMS) of an existing structure, and a circulating plate disposed on the Battery Management. The Battery Management System extends along the first introducing direction F and is disposed on the side plates 11. The circulating plate is disposed on at least one side of the Battery Management System intersecting the first introducing direction F. The circulating plate is provided with the above circulating space and is in surface contact with the battery cells 20m.

In some embodiments, the bottom plate 12 includes a working medium inlet i and a working medium outlet u. A total working medium inlet I and a total working medium outlet U are disposed on the side plates 11. The working medium inlet i communicates with the total working medium inlet I via the circulating space, and/or, the working medium outlet u communicates with the total working medium outlet U via the circulating space.

In this case, the heat exchange working medium circulating in the flowing space and the heat exchange working medium circulating in the bottom plate 12 belong to a same channel of heat exchange working medium, which not only extends the flow path of the heat exchange working medium and improves the energy utilization of the heat exchange working medium, but also can simplify the structure of the battery 100 and reduce the cost.

According to a third aspect, an embodiment of the present application further provides an electrical device, including the above battery 100. The battery 100 is configured to provide electrical energy.

Various technical features of the foregoing embodiments may be combined arbitrarily, and all possible combinations of the various technical features of the foregoing embodiments have not been described for the sake of concise description; however, as long as there is no conflict in the combinations of these technical features, they shall all be regarded as falling within the scope of this specification.

The foregoing embodiments merely describe several implementations of the present application. The description is relatively detailed, but constitutes no limitation on the patent scope of the present application. It is hereby noted that several variations and improvements, which may be made to the embodiments by a person of ordinary skill in the art without departing from the concept of the present application, fall within the protection scope of the present application. Therefore, the patent protection scope of the present application should be subject to the attached claims.

## Claims

1. A battery box (10), comprising:
side plates (11); and
a bottom plate (12), the side plates (11) being disposed on the bottom plate (12) around a periphery of the bottom plate (12);
wherein the bottom plate (12) is provided with a cavity (12a), the cavity (12a) is internally provided with partition pieces (12b), and the partition pieces (12b) partition the cavity (12a) into at least two flow channels (s) that are both introduced long a first introducing direction (F1).

2. The battery box (10) according to claim 1, **characterized in that** the partition pieces (12b) comprise first partition pieces (b1), and an end of each first partition piece (b1) close to inlet ends (i1) of the flow channels (s) makes two of the flow channels (s) adjacent thereto communicate.

3. The battery box (10) according to claim 2, **characterized in that** in the first introducing direction (F1), an end of each first partition piece (b1) close to the inlet ends (i1) is spaced apart from an inner wall of the cavity (12a).

4. The battery box (10) according to any one of claims 1 to 3, **characterized in that** the partition piece (12b) comprises second partition pieces (b2), and in the first introducing direction (F1), an end of each second partition piece (b2) close to the inlet ends (i1) of the flow channels (s) fits with the inner wall of the cavity (12a) to prevent a heat exchange working medium from flowing between two of the flow channels (s) adjacent thereto.

5. The battery box (10) according to claim 4, **characterized in that** in the first introducing direction (F1), the end of each second partition piece (b2) close to the inlet ends (i1) of the flow channels (s) is connected to the inner wall of the cavity (12a).

6. The battery box (10) according to any one of claims 1 to 5, **characterized in that** in the first introducing direction (F1), an end of at least one of the partition pieces (12b) close to outlet ends (u1) of the flow channels (s) is constructed to make the adjacent flow channels (s) communicate.

7. The battery box (10) according to claim 6, **characterized in that** the end of at least one of the partition pieces (12b) close to the outlet ends (u1) of the flow channels (s) is spaced apart from the inner wall of the cavity (12a).

8. The battery box (10) according to any one of claims 1 to 7, **characterized in that** the bottom plate (12) comprises at least one working medium inlet (i) and at least one working medium outlet (u); and
each flow channel (s) is provided with an inlet end (i1) and an outlet end (u1) that are oppositely disposed in the first introducing direction (F1), the inlet ends (i1) all communicate with the working medium inlet (i), and the outlet ends (u1) all communicate with the working medium outlet (u).

9. The battery box (10) according to claim 8, **characterized in that** the outlet ends (u1) of the flow channels (s) communicate with each other.

10. The battery box (10) according to claim 8 or 9, **characterized in that** the working medium inlet (i) and the working medium outlet (u) are located on two opposite sides of the bottom plate (12) in the first introducing direction (F1), the working medium inlet (i) is disposed close to the inlet ends (i1) of the flow channels (s), and the working medium outlet (u) is disposed close to the outlet ends (u1) of the flow channels (s).

11. The battery box (10) according to any one of claims 8 to 10, **characterized in that** the bottom plate (12) further comprises a first blocking rib (12c), a water blocking channel (k) is defined between the first blocking rib (12c) and the inner wall of the cavity (12a), and the water blocking channel (k) communicates with the working medium inlet (i); and
a first flow passing portion (c1) is constructed on the first blocking rib (12c), and the first flow passing portion (c1) makes the water blocking channel (k) communicate with the inlet ends (i1) of the adjacent flow channels (s).

12. The battery box (10) according to any one of claims 8 to 11, **characterized in that** the bottom plate (12) further comprises a second blocking rib (12d), and a water outlet channel (w) is defined between the second blocking rib (12d) and the inner wall of the cavity (12a); and
a second flow passing portion (d1) is constructed on the second blocking rib (12d), the second flow passing portion (d1) makes the water outlet channel (w) communicate with the outlet ends (u1) of the adjacent flow channels (s), and the water outlet channel (w) communicates with the working medium outlet (u).

13. The battery box (10) according to any one of claims 8 to 12, **characterized in that** one working medium inlet (i) and one working medium outlet (u) are configured respectively, the working medium inlet (i) communicates with the inlet ends (i1) of all the flow channels (s), and the working medium outlet (u) communicates with the outlet ends (u1) of all the flow channels (s); and
the working medium inlet (i) and the working medium outlet (u) are located on a same side of the bottom plate (12).

14. The battery box (10) according to any one of claims 8 to 13, **characterized in that** a total working medium inlet (I) and a total working medium outlet (U) are disposed on the side plates (11), the working medium inlet (i) communicates with the total working medium inlet (I), and the working medium outlet (u) communicates with the total working medium outlet (U).

15. The battery box (10) according to claim 14, **characterized in that** a space making the working medium inlet (i) communicate with the total working medium inlet (I) is constructed in the side plates (11), and/or, a space making the working medium outlet (u) communicate with the total working medium outlet (U) is constructed in the side plates (11).

16. A battery, comprising:
the battery box (10) according to any one of claims 1 to 15; and
battery cells (20) received in the battery box (10).

17. The battery according to claim 16, **characterized in that** the battery (100) further comprises a thermal management component (30), the thermal management component (30) is located in a space enclosed by the side plates (11) and the bottom plate (12) and disposed on the side plates (11); and
the thermal management component (30) is in surface contact with at least one of the battery cells (20) and provided with a circulating space for circulation of the heat exchange working medium.

18. The battery according to claim 17, **characterized in that** the bottom plate (12) comprises a working medium inlet (i) and a working medium outlet (u), and a total working medium inlet (I) and a total working medium outlet (U) are disposed on the side plates (11); and
the working medium inlet (i) communicates with the total working medium inlet (I) via the circulating space, and/or, the working medium outlet (u) communicates with the total working medium outlet (U) via the circulating space.

19. An electrical device, comprising the battery (100) according to any one of claims 16 to 18, the battery (100) being configured to provide electrical energy.
